# EUROPEAN PATENT APPLICATION

(11) **EP 3 006 862 A1**
(43) Date of publication of application: **13.04.2016**
(21) Application number: 14803717.9
(22) Date of filing: 04.04.2014
(51) Int. Cl.: F25B 21/02, G05D 23/24, B05B 5/16

(54) **COOLING CONTROL CIRCUIT AND ELECTROSTATIC ATOMIZING DEVICE COMPRISING SAME**

(30) Priority: 28.05.2013 JP 2013111954
(71) Applicant: Panasonic Intellectual Property Management Co., Ltd., Osaka-shi, Osaka 540-6207 (JP)
(72) Inventor: URATANI, Yutaka, Osaka-shi, Osaka 540-6207 (JP); MATSUMOTO, Takaoki, Osaka-shi, Osaka 540-6207 (JP); SUZUKI, Masayuki, Osaka-shi, Osaka 540-6207 (JP)
(74) Representative: Grünecker Patent- und Rechtsanwälte PartG mbB
(86) International application number: PCT/JP2014/001969
(87) International publication number: WO 2014/192211

(57) **Abstract**

An amplifying circuit (2) includes a feedback resistor (RA), and amplifies a voltage that is proportional to a current detected by a current detection resistor (R1) with a gain depending on the feedback resistor (RA). A current control circuit (IC) controls the current flowing through a Peltier element (1) in such a manner that the amplified voltage (VA) output by the amplifying circuit (2) is kept constant. The feedback resistor (RA) includes a thermistor (3) and a fixed resistor (R2) connected to the thermistor (3) in series.

## Description

### TECHNICAL FIELD

The present invention relates to a cooling control circuit of a Peltier element, and an electrostatic atomizing device incorporated with the cooling control circuit.

### BACKGROUND ART

Conventionally, there is known a configuration, in which a Peltier element is energized for cooling control, and dew condensation water is produced from moisture in the air, Patent Literature 1 discloses a configuration, in which a discharge electrode is cooled by cooling a Peltier element, dew condensation water is produced around the discharge electrode from moisture in the air, and a high voltage is applied to the produced dew condensation water for electrostatic atomization. According to this configuration, nanometer size charged particulate water containing radicals is produced.

Patent Literature 1 discloses the following configuration. Specifically, an output voltage of an amplifying circuit configured such that a thermistor is connected between an inverted input terminal of an operational amplifier and an output terminal, and an output voltage of an amplifying circuit configured such that a fixed resistor is connected between an inverted input terminal of an operational amplifier and an output terminal are individually input to a current control circuit depending on an ambient temperature. When the ambient temperature is not lower than a predetermined temperature, the current control circuit controls the Peltier element at a constant current, and when the ambient temperature is lower than the predetermined temperature, the current control circuit controls the Peltier element in such a manner that the current decreases, as the ambient temperature lowers.

In the aforementioned conventional art, two amplifying circuits are combined. In view of the above, the amplifying circuits are separated from each other by interposing a diode between each of the amplifying circuits and the current control circuit so as to prevent interaction between the amplifying circuits. This may make the circuit configuration complicated. In addition to the above, precision in current control may be lowered due to individual variations of diodes or temperature characteristics of diodes.

### CITATION LIST

### PATENT LITERATURE

Patent Literature 1: Japanese Unexamined Patent Publication No. 2011-70446

### SUMMARY OF INVENTION

An object of the invention is to provide a technique for optimally controlling a Peltier element depending on an ambient temperature, while using a simplified circuit configuration and with a less number of elements, as compared with the conventional art.

A cooling control circuit according to an aspect of the invention is a cooling control circuit for controlling cooling of a Peltier element. The cooling control circuit includes a current detection resistor which detects a current flowing through the Peltier element; an amplifying circuit including a feedback resistor, and configured to amplify a voltage that is proportional to the current detected by the current detection resistor with a gain depending on the feedback resistor; and a current control circuit which controls the current flowing through the Peltier element in such a manner that the amplified voltage output by the amplifying circuit is set to a predetermined target value. The feedback resistor includes a variable resistor whose resistance value changes depending on a temperature, and a fixed resistor connected to the variable resistor in series.

According to the aforementioned configuration, it is possible to optimally control the Peltier element depending on the ambient temperature, while using a simplified circuit configuration and with a less number of elements, as compared with the conventional art.

### BRIEF DESCRIPTION OF DRAWINGS

FIG. 1 is a circuit diagram of a cooling control circuit in a first embodiment of the invention;
FIG. 2 is a graph illustrating a relationship between current flowing through a Peltier element and ambient temperature in the first embodiment;
FIG. 3 is a graph illustrating temperature characteristics of a thermistor in the first embodiment;
FIG. 4 is a circuit diagram of a cooling control circuit in a second embodiment;
FIG. 5 is a graph illustrating a relationship between current flowing through a Peltier element and ambient temperature in the second embodiment;
FIG. 6 is a graph illustrating temperature characteristics of a combined resistor obtained by connecting a thermistor and a posistor in series;
FIG. 7 is a circuit diagram of a cooling control circuit in a third embodiment;
FIG. 8 is a graph illustrating a relationship between current flowing through a Peltier element and ambient temperature in the third embodiment;
FIG. 9 is a graph illustrating temperature characteristics of a posistor; and
FIG. 10 is a schematic configuration diagram illustrating an electrostatic atomizing device incorporated with a cooling control circuit of a Peltier element according to an embodiment of the invention.

### DESCRIPTION OF EMBODIMENTS

### (First Embodiment)

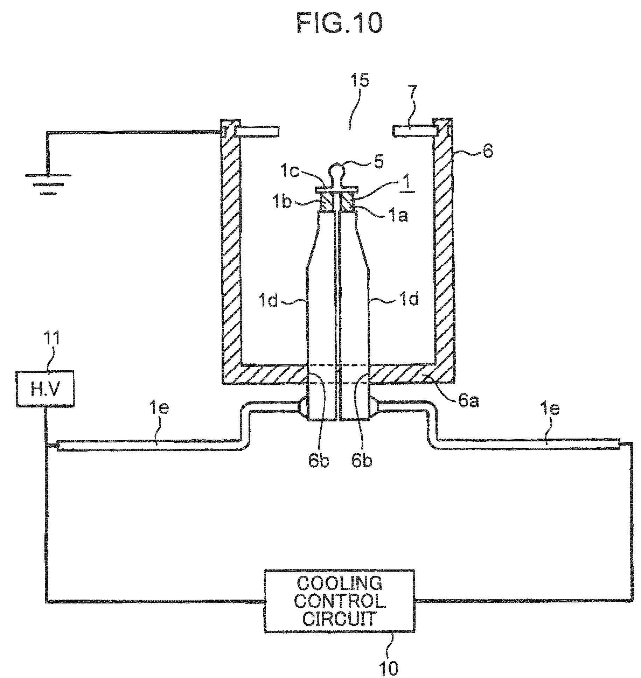

FIG. 10 is a schematic configuration diagram illustrating an electrostatic atomizing device incorporated with a cooling control circuit 10 of a Peltier element 1 in an embodiment of the invention. The Peltier element I is provided with a P-type semiconductor element 1a, an N-type semiconductor element 1b, an electrical connecting portion 1c, and a pair of heat radiation energizing members 1d.

In the example illustrated in FIG. 10, the upper part of the P-type semiconductor element 1a and the upper part of the N-type semiconductor element 1b correspond to the endothermic side, and the lower part of the P-type semiconductor element 1a and the lower part of the N-type semiconductor element 1b correspond to the exothermic side. The upper part of the P-type semiconductor element 1a and the upper part of the N-type semiconductor element 1b are connected to the electrical connecting portion 1c. The lower part of the P-type semiconductor element 1a and the lower part of the N-type semiconductor element 1b are connected to the heat radiation energizing members 1d made of an electric conductive material. The paired heat radiation energizing members 1d are respectively connected to lead wires 1e.

A discharge electrode 5 projects from the upper side of the electrical connecting portion 1c. A housing 6 includes a bottom wall portion 6a, and has a bottomed tubular shape. A pair of holes 6b are formed in the bottom wall portion 6a. The paired heat radiation energizing members 1d are respectively passed through the holes 6b. In this way, the discharge electrode 5 is accommodated in the housing 6.

An opposing electrode 7 is supported on a tip end opening portion of the housing 6 in such a manner as to face the discharge electrode 5. The opposing electrode 7 is an annular member having an emission hole 15 formed in the middle thereof. The opposing electrode 7 is grounded. The lead wires 1e are electrically connected to the cooling control circuit 10 via an electric conductive path. The cooling control circuit 10 is provided with a DC power supply.

Further, the cooling control circuit 10 is connected to a high voltage applying portion 11 via the electric conductive path. The high voltage applying portion 11 applies a high voltage to the discharge electrode 5.

Cooling of the Peltier element 1 is controlled by the cooling control circuit 10. Specifically, the electrical connecting portion 1c is cooled, and the discharge electrode 5 is cooled. In this way, when the discharge electrode 5 is cooled, moisture in the air is cooled, and dew condensation water is produced around the discharge electrode 5. In other words, water is supplied to the discharge electrode 5 by producing dew condensation water. Meanwhile, heat of the Peltier element 1 is radiated by the heat radiation energizing members 1d.

When the high voltage applying portion 11 applies a high voltage to the discharge electrode 5 around which dew condensation water is produced, the dew condensation water is electrostatically atomized. Thus, a large amount of nanometer size charged particulate water containing radicals is produced.

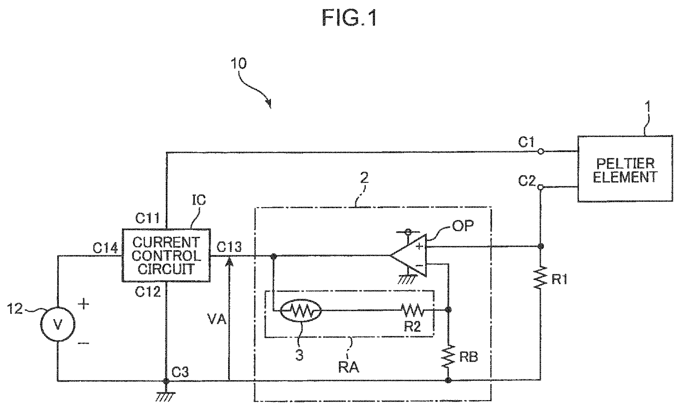

FIG. 1 is a circuit diagram of the cooling control circuit 10 in the first embodiment of the invention. The cooling control circuit 10 is provided with the Peltier element 1, an amplifying circuit 2, a current detection resistor R1, a current control circuit IC, and a DC power supply 12.

The current detection resistor R1 is connected between a terminal C2 of the Peltier element 1 and a ground terminal C3 for detecting a current flowing through the Peltier element 1.

The amplifying circuit 2 is disposed between the current detection resistor R1 and the current control circuit 1C. The amplifying circuit 2 amplifies a voltage that is proportional to the current detected by the current detection resistor R1, and outputs the amplified voltage to the current control circuit IC.

The current control circuit IC is configured such that a terminal C11 is connected to a terminal C1 of the Peltier element 1, a terminal C12 is connected to the ground terminal C3, a terminal C13 is connected to the output terminal of the amplifying circuit 2, and a terminal C14 is connected to the plus side of the DC power supply 12.

The current control circuit IC allows a current to flow through the Peltier element 1 in such a manner that an amplified voltage VA amplified by the amplifying circuit 2 is kept at a predetermined target value. In this example, the current control circuit IC keeps the amplified voltage VA at a target value by allowing a pulse current having a constant amplitude to flow through the Peltier element 1, and by increasing or decreasing the duty ratio of the pulse current. In other words, the current control circuit IC PWM-controls the Peltier element 1. In this example, for instance, the target value may be 0.9 V.

The DC power supply 12 is constituted by e.g. a voltage circuit for generating a predetermined DC voltage. The plus side of the DC power supply 12 is connected to the terminal C14 of the current control circuit IC, and the minus side of the DC power supply 12 is connected to the ground terminal C3.

The amplifying circuit 2 is constituted by a non-inverted amplifying circuit provided with an operational amplifier OP, a feedback resistor RA, and a resistor RB. The plus terminal (inverted input terminal) of the operational amplifier OP is connected to the current detection resistor R1, and the minus terminal (non-inverted input terminal) of the operational amplifier OP is connected to the resistor RB. The feedback resistor RA is connected between the minus terminal and the output terminal of the operational amplifier OP. The resistor RB is connected between the minus terminal and the ground terminal C3.

The feedback resistor RA is provided with a thermistor 3 and a fixed resistor R2. In this example, the thermistor 3 is an NTC (negative temperature coefficient) element, which is a resistor element configured such that the resistance value of the resistor element decreases, as the temperature rises, The fixed resistor R2 is a resistor element whose resistance value is fixed. The thermistor 3 and the fixed resistor R2 are connected in series. Various values may be employed as the resistance value of the fixed resistor R2. In the embodiment, the resistance value of the fixed resistor R2 is 20 kΩ.

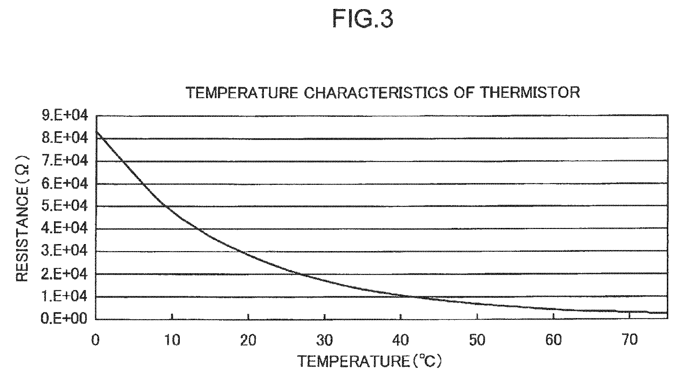

The thermistor 3 has characteristics (example of first characteristics) such that the resistance value of the thermistor 3 changes depending on the ambient temperature of the space in which an electrostatic atomizing device is installed. Preferably, the thermistor 3 may be installed in a place where the influence of a change in the ambient temperature is small. The thermistor 3 has the temperature characteristics as illustrated by the graph of FIG. 3. FIG. 3 is a graph illustrating the temperature characteristics of the thermistor 3 in the first embodiment. The vertical axis of the graph represents a resistance value, and the horizontal axis of the graph represents a temperature. The indication "2.E+0.4" described on the vertical axis indicates the fourth power of 2×10=20 kΩ.

The cooling control circuit 10 is operated as follows. First of all, a current flowing through the Peltier element 1 is detected by the current detection resistor R1. A voltage proportional to the detected current is input to the amplifying circuit 2. The amplifying circuit 2 amplifies the input voltage with a gain, which is determined by the feedback resistor RA and the resistor RB; and outputs an amplified voltage VA to the current control circuit IC. The current control circuit IC adjusts the duty ratio of a pulse current in such a manner that the amplified voltage VA is set to a predetermined target value. In this example, the current control circuit IC adjusts the duty ratio in such a manner that the duty ratio is incremented by one step when the amplified voltage VA is smaller than the target value, and the duty ratio is decremented by one step when the amplified voltage VA is smaller than the target value. In this example, the duty ratio corresponding to one step may be a predetermined fixed value such as 0.1 %, 0.5 %, 1 %, or 5 %.

According to the aforementioned configuration, it is possible to control cooling of the Peltier element 1 in such a manner that the current flowing through the Peltier element 1 increases, as the ambient temperature rises.

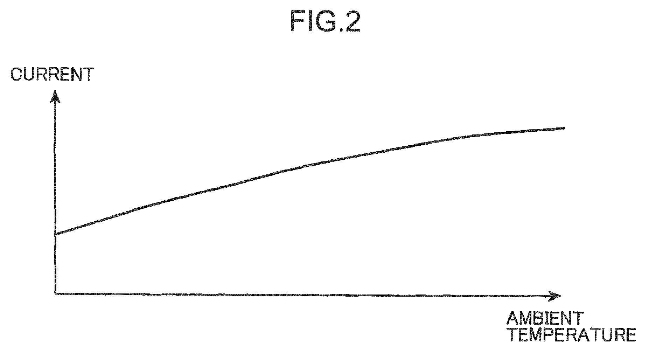

FIG. 2 is a graph illustrating a relationship between current flowing through the Peltier element 1 and ambient temperature in the first embodiment. The vertical axis of the graph represents a current, and the horizontal axis of the graph represents an ambient temperature. As illustrated in FIG. 2, it is clear that the current flowing through the Peltier element 1 gradually increases, as the ambient temperature rises. In the embodiment, the Peltier element 1 is PWM-controlled. Therefore, the current value on the vertical axis indicates an average value that is determined depending on a duty ratio.

As illustrated in FIG. 3, the thermistor 3 is configured such that the resistance value of the thermistor 3 gradually decreases in such a manner as to make a downwardly projecting curve, as the temperature lowers. The gain GA of the amplifying circuit 2 is determined by GA=1+RA/RB, where RA is a sum of the resistance value of the thermistor 3 and the resistance value of the fixed resistor R2, and RB is the resistance value of the resistor RB, which is constant.

As illustrated in FIG. 3, the thermistor 3 has characteristics such that the resistance value of the thermistor 3 decreases, as the temperature rises. Therefore, the gain GA decreases, as the temperature rises, and the amplified voltage VA decreases, as the temperature rises. Meanwhile, the current control circuit IC increases the duty ratio of a pulse current in order to keep the amplified voltage VA at a target value, and in order to compensate for lowering of the amplified voltage VA by temperature rise. According to this control, the current flowing through the Peltier element 1 increases, as the temperature rises, and the Peltier element 1 is controlled in accordance with the characteristics illustrated in FIG. 2.

In other words, in the embodiment, it is possible to control the Peltier element 1 in such a manner that the current flowing through the Peltier element 1 decreases, as the ambient temperature lowers. This makes it possible to prevent excessive cooling of the Peltier element 1 when the ambient temperature is low, and to prevent freezing of dew condensation water. This is advantageous in stably producing dew condensation water, and in implementing stable electrostatic atomization.

In the embodiment, not only the thermistor 3 but also the fixed resistor R2 are provided in the feedback resistor RA. The following is a description about a case, in which the fixed resistor R2 is not provided. If the fixed resistor R2 is not provided, the resistance value of the thermistor 3 gradually decreases, as the temperature rises. As a result, the amplified voltage VA also gradually decreases. Then, the current control circuit IC may increase the duty ratio of a pulse current without a limit in an attempt to compensate for lowering of the amplified voltage VA, and may allow an excessively large current to flow through the Peltier element 1. This may damage or break the Peltier element 1.

In view of the above, in the embodiment, the fixed resistor R2 is provided in the feedback resistor RA. This prevents lowering of the amplified voltage VA even when the ambient temperature exceeds a predetermined temperature. Thus, it is possible to prevent an excessively large current from flowing through the Peltier element 1 when the ambient temperature is high, and to prevent damage or breakage of the Peltier element 1. Providing the fixed resistor R2 makes it possible to control the Peltier element 1 by the characteristics illustrated in FIG. 2, without providing two amplifying circuits as described in Patent Literature 1. This is advantageous in configuring an electrostatic atomizing device with a simplified circuit configuration and with a less number of elements.

In the embodiment, in order to obtain the advantageous effects of the fixed resistor R2, the thermistor 3 is configured such that the resistance value of the thermistor 3 is larger than the resistance value of the fixed resistor R2 on the low temperature side of an ambient temperature range (e.g. from 0 °C to 50 °C, hereinafter, called as "use ambient temperature range") in which use of the cooling control circuit 10 is assumed, and the resistance value of the thermistor 3 is smaller than the resistance value of the fixed resistor R2 on the high temperature side of the use ambient temperature range. In the embodiment, the resistance value of the fixed resistor R2 is 20 kΩ. In the example of FIG. 3, a predetermined temperature at which the use ambient temperature range is divided to the low temperature side and the high temperature side is e.g. around 27 to 28 °C. This is merely an example. The predetermined temperature may be e.g. 25 °C, which is the mid temperature of the use ambient temperature range, a temperature moderately higher than the mid temperature (e.g. 30 °C), a temperature moderately lower than the mid temperature (e.g. 20 °C), or a temperature slightly lower than 50 °C.

### (Second Embodiment)

A cooling control circuit 10 in the second embodiment has a feature such that a posistor is further provided in a feedback resistor RA. A posistor is constituted by a PTC (positive temperature coefficient) element, which is a resistor element having characteristics (example of second characteristics) such that the resistance value increases, as the temperature rises.

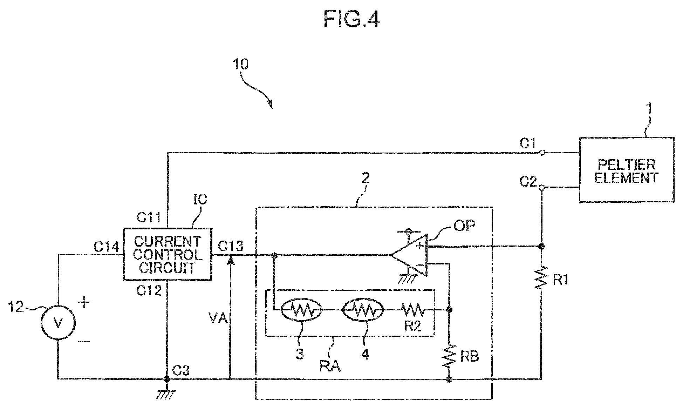

FIG. 4 is a circuit diagram of the cooling control circuit 10 in the second embodiment. A posistor 4 in addition to a thermistor 3 and a fixed resistor R2 are connected in the feedback resistor RA in series. The configuration of the second embodiment is the same as the configuration of the first embodiment except for the above. Preferably, the thermistor 3 and the posistor 4 may be installed in a place where the influence of a change in the ambient temperature is small in order to stably detect the ambient temperature.

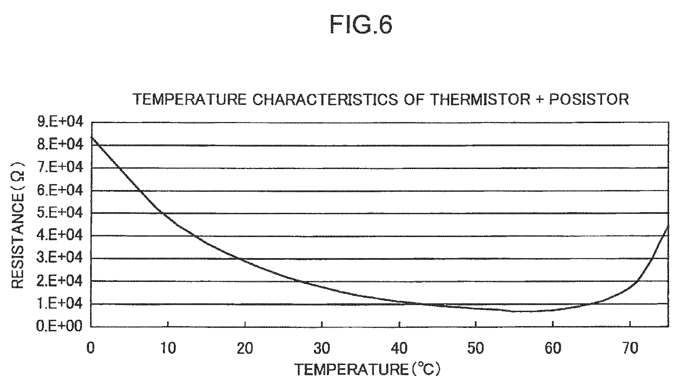

FIG. 6 is a graph illustrating temperature characteristics of a combined resistor obtained by connecting the thermistor 3 and the posistor 4 in series. The vertical axis of the graph represents a resistance value, and the horizontal axis of the graph represents a temperature. As illustrated in FIG. 6, the temperature characteristics of a combined resistor are such that the influence of the thermistor 3 is dominant when the temperature is not higher than a predetermined temperature (e.g. from 50 °C to 60 °C), and the influence of the posistor 4 is dominant when the temperature exceeds the predetermined temperature. In other words, the temperature characteristics of the combined resistor are so-called bathtub characteristics.

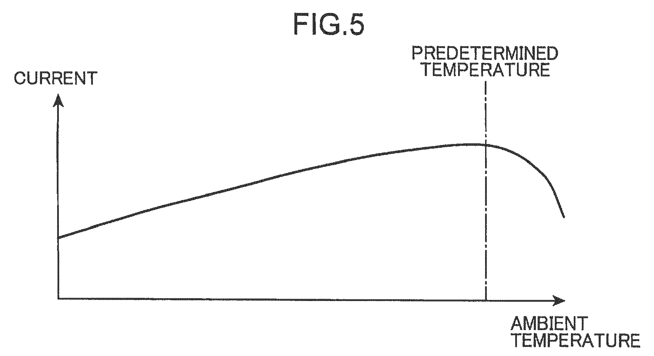

FIG. 5 is a graph illustrating a relationship between current flowing through the Peltier element I and ambient temperature in the second embodiment. The vertical axis of the graph represents a current, and the horizontal axis of the graph represents an ambient temperature. As illustrated in FIG. 5, the second embodiment is the same as the first embodiment in a point that the current flowing through the Peltier element 1 gradually increases, as the ambient temperature rises. However, in FIG. 5, when the ambient temperature reaches a predetermined temperature, the current starts to decrease, and thereafter, as the ambient temperature rises, the current sharply decreases. The predetermined temperature may be the upper limit (e.g. 50 °C) of the aforementioned use ambient temperature range, or a temperature (e.g. 60 °C), which is obtained by adding a predetermined margin to 50 °C.

In the embodiment, the gain GB of the amplifying circuit 2 is determined by 1+RA/RB. In the embodiment, the posistor 4 is included in the feedback resistor RA. Therefore, the resistance value of the feedback resistor RA is determined by a combined resistor of the thermistor 3, the posistor 4, and the fixed resistor R2.

The feedback resistor RA has the temperature characteristics as illustrated in FIG. 6. Therefore, the amplified voltage VA gradually decreases until the temperature reaches a predetermined temperature, starts to increase when the temperature exceeds the predetermined temperature, and sharply increases as the temperature further rises. The current control circuit IC increases the duty ratio of a pulse current in order to compensate for lowering of the amplified voltage VA until the temperature exceeds the predetermined temperature. Therefore, the current flowing through the Peltier element 1 gradually increases as illustrated in FIG. 5 until the temperature exceeds the predetermined temperature. On the other hand, when the temperature exceeds the predetermined temperature, the amplified voltage VA increases. Therefore, the current control circuit IC decreases the duty ratio of a pulse current flowing through the Peltier element 1 as illustrated in FIG. 5.

According to the aforementioned configuration, it is possible to keep the current flowing through the Peltier element 1 to be small when the ambient temperature is low around 0 °C. This makes it possible to prevent excessive cooling of the Peltier element 1 and to prevent freezing of dew condensation water. Thus, the aforementioned configuration is advantageous in stably producing dew condensation water, and in implementing stable electrostatic atomization. Further, when the ambient temperature is not lower than a predetermined temperature, it is possible to decrease the current flowing through the Peltier element 1, as the ambient temperature rises. This is advantageous in preventing an excessively large current from flowing through the Peltier element 1, and in extending the useful life of the Peltier element 1. Further, the aforementioned configuration is advantageous in preventing temperature rise of the cooling control circuit 10, and in securing safe use of the electrostatic atomizing device.

### (Third Embodiment)

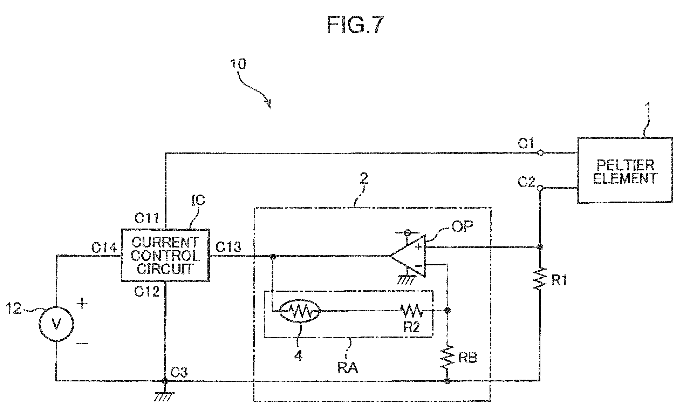

FIG. 7 is a circuit diagram of a cooling control circuit 10 in the third embodiment. The third embodiment has a feature such that a feedback resistor RA is constituted by a fixed resistor R2 and a posistor 4. The configuration of the third embodiment is the same as the configuration of the first embodiment except for the above.

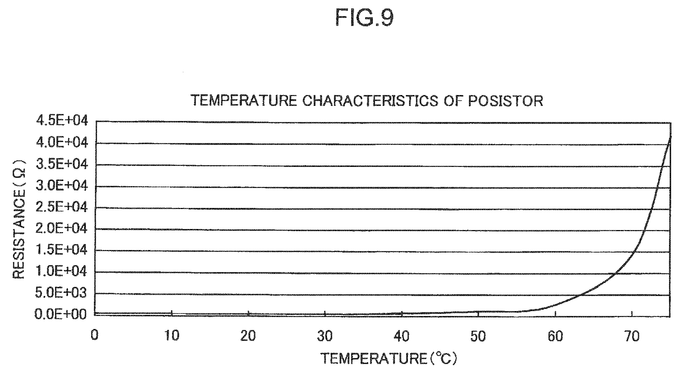

FIG. 9 is a graph illustrating temperature characteristics of the posistor 4. The vertical axis of the graph represents a current, and the horizontal axis of the graph represents a temperature. In the embodiment, the posistor 4 has a resistance value of 10 % or less with respect to the resistance value of the fixed resistor R2 when the temperature is within the use ambient temperature range (e.g. from 0 °C to 50 °C) of the cooling control circuit 10. On the other hand, when the temperature exceeds the use ambient temperature range, the posistor 4 has the characteristics such that the resistance value of the posistor 4 is larger than the resistance value of the fixed resistor R2.

According to the aforementioned configuration, the resistance value of the posistor 4 is kept at a very small value until the temperature exceeds a predetermined temperature (e.g. 50 °C). After the temperature exceeds the predetermined temperature, the resistance value of the posistor 4 gradually increases. When the temperature exceeds 60 °C, the increase rate of the resistance value further increases, and when the temperature exceeds 70 °C, the resistance value sharply increases.

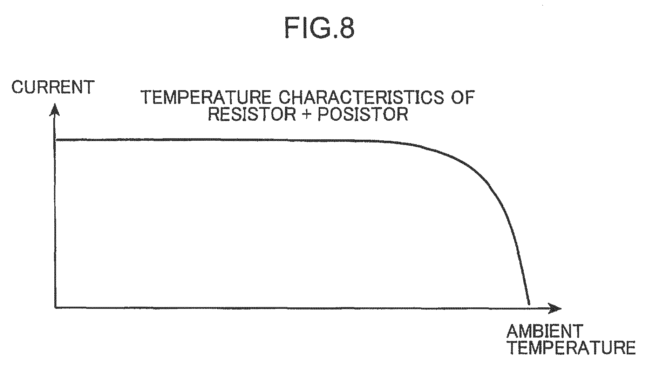

FIG. 8 is a graph illustrating a relationship between current flowing through the Peltier element 1 and ambient temperature in the third embodiment. The vertical axis of the graph represents a current, and the horizontal axis of the graph represents an ambient temperature.

In the third embodiment, the posistor 4 has the characteristics as illustrated in FIG. 9. Therefore, the amplified voltage VA is such that the influence of the resistance value of the fixed resistor R2 is dominant when the temperature is within the use ambient temperature range, and the amplified voltage VA is kept substantially at a target value. Therefore, when the temperature is within the use ambient temperature range, the current control circuit IC keeps the duty ratio of a pulse current substantially at a constant value, and allows a current of a substantially fixed value to flow through the Peltier element 1.

On the other hand, when the temperature exceeds the use ambient temperature range, the influence of a resistance value of the posistor 4 is dominant, and the amplified voltage VA increases as the ambient temperature rises. In view of the above, the current control circuit IC lowers the duty ratio of a pulse current when the temperature exceeds the use ambient temperature range in order to keep the increasing amplified voltage VA at a target value. As a result of the above control, the current flowing through the Peltier element 1 decreases, as the ambient temperature rises.

As described above, when the ambient temperature exceeds the use ambient temperature range, the current flowing through the Peltier element 1 decreases. This is advantageous in preventing damage or breakage of the Peltier element 1, and in extending the useful life of the Peltier element 1.

In the embodiment, as illustrated in FIG. 10, the Peltier element 1 is provided with a pair of semiconductor elements i.e. a P-type semiconductor element 1a and an N-type semiconductor element 1b. The embodiment is not limited to the above. Alternatively, a Peltier element 1 may be configured by joining a plurality of pairs of semiconductor elements in series, wherein each pair of the semiconductor elements is constituted by a P-type semiconductor element 1a and an N-type semiconductor element 1b.

Further, in the configuration illustrated in FIG. 10, the electrical connecting portion 1c functions as a cooling portion. Alternatively, a cooling portion may be provided independently of the electrical connecting portion 1c, and a discharge electrode 5 may project from the cooling portion. Further, in FIG. 10, the opposing electrode 7 is provided. Alternatively, the opposing electrode 7 may be omitted.

Further, in the embodiment, the current control circuit IC PWM-controls a current flowing through the Peltier element 1. Alternatively, the value of a current flowing through the Peltier element I may be directly changed. In this case, the current control circuit IC is configured such that the current flowing through the Peltier element 1 is increased step by step when the amplified voltage VA is smaller than a target value, and that the current flowing through the Peltier element 1 is decreased step by step when the amplified voltage VA is larger than the target value. The current value corresponding to one step may be a predetermined fixed value.

Further, in the embodiment, a non-inverted amplifying circuit is employed as the amplifying circuit 2. Alternatively, an inverted amplifying circuit may be employed as the amplifying circuit 2. In this case, a current detection resistor R1 is connected to the minus terminal of an operational amplifier OP, and a resistor RB is connected to the plus terminal of the operational amplifier OP. In addition, a feedback resistor RA may be provided between the plus terminal of the operational amplifier OP and the output terminal.

The following is a summary of the embodiments.

A cooling control circuit according to any one of the embodiments is a cooling control circuit for controlling cooling of a Peltier element. The cooling control circuit includes a current detection resistor which detects a current flowing through the Peltier element; an amplifying circuit including a feedback resistor, and configured to amplify a voltage that is proportional to the current detected by the current detection resistor with a gain depending on the feedback resistor; and a current control circuit which controls the current flowing through the Peltier element in such a manner that the amplified voltage output by the amplifying circuit is set to a predetermined target value. The feedback resistor includes a variable resistor whose resistance value changes depending on a temperature, and a fixed resistor connected to the variable resistor in series.

According to the aforementioned configuration, the fixed resistor in addition to the variable resistor are provided in the feedback resistor. In this configuration, when the resistance value of the variable resistor decreases as the temperature changes, lowering of the amplified voltage is prevented by the resistance value of the fixed resistor. This makes it possible to prevent an excessively large current from flowing through the Peltier element, and to prevent damage or breakage of the Peltier element. Thus, it is possible to configure the cooling control circuit with a simplified circuit configuration and with a less number of elements, without the need of providing two amplifying circuits as disclosed in Patent Literature 1.

Further, the variable resistor is provided in the feedback resistor. This makes it possible to keep the current flowing through the Peltier element to be small when the temperature is low. This makes it possible to prevent excessive cooling of the Peltier element. Thus, the aforementioned configuration is advantageous in preventing freezing of dew condensation water produced around the Peltier element, and in implementing stable electrostatic atomization.

Further, in the aforementioned configuration, the variable resistor may be constituted by a resistor element having first characteristics such that the resistance value of the variable resistor decreases, as the temperature rises, or a resistor element having second characteristics such that the resistance value of the variable resistor increases, as the temperature rises.

According to the aforementioned configuration, it possible to gradually decrease the amplified voltage, as the temperature rises by constituting the variable resistor by the resistor element having the first characteristics such that the resistance value of the variable resistor decreases, as the temperature rises. This makes it possible to gradually increase the current flowing through the Peltier element, as the temperature rises. According to the aforementioned configuration, it is possible to keep the current flowing through the Peltier element to be small when the temperature is low. This is advantageous in preventing excessive cooling of the Peltier element.

Further, it possible to increase the resistance value of the variable resistor when the temperature exceeds the ambient temperature range, in which use of the cooling control circuit is assumed by constituting the variable resistor by the resistor element having the second characteristics such that the resistance value of the variable resistor increases, as the temperature rises. This makes it possible to keep the current flowing through the Peltier element to be small. This is advantageous in preventing damage or breakage of the Peltier element, and in extending the useful life of the Peltier element.

Further, in the aforementioned configuration, the resistor element having the first characteristics may have characteristics such that the resistance value of the resistor element is larger than a resistance value of the fixed resistor until the temperature reaches a predetermined temperature within a use ambient temperature range, in which use of the cooling control circuit is assumed, and that the resistance value of the resistor element is smaller than the resistance value of the fixed resistor after the temperature exceeds the predetermined temperature.

According to the aforementioned configuration, the gain is determined mainly by the resistor element having the first characteristics until the temperature reaches the predetermined temperature within the use ambient temperature range. This makes it possible to prevent excessive cooling of the Peltier element. Meanwhile, the gain is determined mainly by the fixed resistor when the temperature exceeds the predetermined temperature. This is advantageous in extending the useful life of the Peltier element.

Further, in the aforementioned configuration, the resistor element having the second characteristics may have characteristics such that the resistance value of the resistor element is smaller than a resistance value of the fixed resistor within a use ambient temperature range, in which use of the cooling control circuit is assumed, and that the resistance value of the resistor element is larger than the resistance value of the fixed resistor after the temperature exceeds the use ambient temperature range.

According to the aforementioned configuration, the gain is determined mainly by the resistor element having the second characteristics when the temperature exceeds the use ambient temperature. This is advantageous in extending the useful life of the Peltier element.

Further, in the aforementioned configuration, the variable resistor may be constituted by combination of a resistor element having first characteristics such that the resistance value of the resistor element decreases, as the temperature rises, and a resistor element having second characteristics such that the resistance value of the resistor element increases, as the temperature rises.

According to the aforementioned configuration, the gain of the amplifying circuit is determined mainly by the resistor element having the first characteristic such that the resistance value of the resistor element decreases as the temperature rises until the ambient temperature reaches the predetermined temperature. This makes it possible to prevent an excessively large current from flowing through the Peltier element when the ambient temperature is low. This is advantageous in preventing excessive cooling of the Peltier element. When the ambient temperature approaches the predetermined temperature, an increase in the current flowing through the Peltier element is prevented due to the existence of the fixed resistor. When the ambient temperature exceeds the target value, the gain of the amplifying circuit is determined mainly by the resistor element having the second characteristics such that the resistance value increases, as the temperature rises. This makes it possible to gradually decrease the current flowing through the Peltier element. This is advantageous in preventing damage or breakage of the Peltier element.

Further, in the aforementioned configuration, the amplifying circuit may be provided with an operational amplifier. The current detection resistor may be connected to one of input terminals of the operational amplifier. The feedback resistor may be connected between the other one of the input terminals of the operational amplifier and an output terminal.

The aforementioned configuration is advantageous in obtaining a stable amplified voltage by the amplifying circuit incorporated with the operational amplifier.

An electrostatic atomizing device according to any one of the embodiments includes a Peltier element, and the aforementioned cooling control circuit.

According to the aforementioned configuration, it is possible to control the Peltier element by the cooling control circuit having the aforementioned advantageous effects. This is advantageous in implementing stable electrostatic atomization.

### INDUSTRIAL APPLICABILITY

According to the invention, it is possible to optimally control a Peltier element depending on an ambient temperature. The invention is advantageously applied in air cleaners, beauty equipment such as dryers and steamers, and refrigerators.

## Claims

1. A cooling control circuit for controlling cooling of a Peltier element, comprising:
a current detection resistor which detects a current flowing through the Peltier element;
an amplifying circuit including a feedback resistor, and configured to amplify a voltage that is proportional to the current detected by the current detection resistor with a gain depending on the feedback resistor; and
a current control circuit which controls the current flowing through the Peltier element in such a manner that the amplified voltage output by the amplifying circuit is set to a predetermined target value, wherein
the feedback resistor includes a variable resistor whose resistance value changes depending on a temperature, and a fixed resistor connected to the variable resistor in series.

2. The cooling control circuit according to Claim 1, wherein
the variable resistor is constituted by a resistor element having first characteristics such that the resistance value of the variable resistor decreases, as the temperature rises, or a resistor element having second characteristics such that the resistance value of the variable resistor increases, as the temperature rises.

3. The cooling control circuit according to Claim 2, wherein
the resistor element having the first characteristics has characteristics such that the resistance value of the resistor element is larger than a resistance value of the fixed resistor until the temperature reaches a predetermined temperature within a use ambient temperature range, in which use of the cooling control circuit is assumed, and that the resistance value of the resistor element is smaller than the resistance value of the fixed resistor after the temperature exceeds the predetermined temperature.

4. The cooling control circuit according to Claim 2, wherein
the resistor element having the second characteristics has characteristics such that the resistance value of the resistor element is smaller than a resistance value of the fixed resistor within a use ambient temperature range, in which use of the cooling control circuit is assumed, and that the resistance value of the resistor element is larger than the resistance value of the fixed resistor after the temperature exceeds the use ambient temperature range.

5. The cooling control circuit according to Claim 1, wherein
the variable resistor is constituted by combination of a resistor element having first characteristics such that the resistance value of the resistor element decreases, as the temperature rises, and a resistor element having second characteristics such that the resistance value of the resistor element increases, as the temperature rises.

6. The cooling control circuit according to Claim 1, wherein
the amplifying circuit is provided with an operational amplifier,
the current detection resistor is connected to one of input terminals of the operational amplifier, and
the feedback resistor is connected between the other one of the input terminals of the operational amplifier and an output terminal.

7. An electrostatic atomizing device, comprising:
a Peltier element; and
the cooling control circuit of any one of Claims 1 to 6.
